# EUROPEAN PATENT APPLICATION

(11) **EP 2 926 648 A1**
(43) Date of publication of application: **07.10.2015**
(21) Application number: 13858028.7
(22) Date of filing: 29.11.2013
(51) Int. Cl.: A01G 9/10, A01G 9/12, A01K 63/00

(54) **ALL-IN-ONE FLEXIBLE, MULTI-PURPOSE STAND-ALONE CONTAINER COMPRISING AN IMPROVED FERTILISED SUBSTRATE FOR AQUATIC PLANTS AND MARSH PLANTS, AND PRODUCTION METHOD THEREOF**

(30) Priority: 30.11.2012 ES 201231870
(71) Applicant: Alonso Giménez, Yago, 08010 Barcelona (ES)
(72) Inventor: Alonso Giménez, Yago, 08010 Barcelona (ES)
(74) Representative: Isern-Jara, Nuria
(86) International application number: PCT/ES2013/070829
(87) International publication number: WO 2014/083231

(57) **Abstract**

The invention relates to an all-in-one flexible, multi-purpose stand-alone container comprising an improved fertilised substrate for aquatic plants and marsh plants, and to the production method thereof. The container is a bag made from a highly-durable porous stretch material and the substrate is a mixture of: earth (black earth, coconut fibre, peat, etc.), fertilisers (humic acid, fulvic acid, macronutrients, micronutrients, etc.), which can take the form of controlled-release fertilisers, and porous material (volcanic sand, pumice stone, porous ceramics, sponges). The invention allows the large majority of aquatic and marsh plants to be packaged for sale in an all-in-one flexible, multipurpose stand-alone container incorporating an improved fertilised substrate.

## Description

### Objet of the invention

The present invention belongs to the technical field of the cultivation of aquatic and marsh plants, namely, to the technical field of the manufacture of a substrate in a flexible, multi-purpose stand-alone container, which is fertilised and suitable for the growth of aquatic and marsh plants in a submerged, partially submerged or emerged state.

The object of the present invention is an all-in-one, flexible multi-purpose container comprising an improved fertilised substrate and the production method thereof, which involves an easy manufacture, handling, transport, marketing, maintenance and use, which is usable by non specialist users and promotes the growth of aquatic and marsh plants cultivated therein, regardless of the environment and support in which they are located.

### Background of the invention

Aquatic and marsh plants are plants adapted to very humid or aquatic environments that can be found either completely or partially submerged or as floating plants. Their cultivation and distribution to decorate or use in artificial ponds and aquariums has currently developed to a great extent.

Aquatic plants or macrophytes, also known as hydrophyte plants or hydrophilic or hygrophyte plants, are plants adapted to very humid or aquatic environments such as lakes, ponds, pools, estuaries, swamps, riverbanks, deltas or marine lagoons. These plants can be found both among algae and among vascular plants: bryophytes, pteropsida and angiosperms, monocotyledonous and dicotyledonous families. Their adaptation to the aquatic environment varies. It is possible to find different groups of plants: some of them completely submerged, other, the largest group, partially submerged or with floating leaves.

Aquatic plants have to be placed on the market in a medium that enables their transport and promotes their growth, currently they are marketed planted in the following formats:
▪ Pot format; submerged or partially submerged, with rock wool filling and a continuous water supply, which is absorbed by the rock wool during their cultivation in a greenhouse. The disadvantages of this format are:
   o the end user must extract the plant from the rock wool, a process that often is quite complex, since usually there are fragments of rock wool left between the roots, which eventually will get detached and, if the plant is for instance in an aquarium, it will be necessary to remove them;
   o after removing the rock wool the roots must be trimmed to promote the growth of the plant and carry out the planting thereof in a substrate specific for aquarium plants;
   o the planting is a long and tedious process that requires an experienced user;
   o the plant experiences high "stress" levels due to the handling, root trimming, planting and change from an emerged environment to a submerged one.
▪ Compressive fastening-loop format; it is used with cuttings cut and held together by means of a compressive fastening-loop system, which compresses the cuttings. The disadvantages of this format are:
   o when placed on the market, the plant suffers the aggressive effects of pruning, root loss, and handling, when it is inserted into the compressive fastening-loop;
   o the end user will have to remove the ring, trim the roots again and plant it into an appropriate substrate, consequently the plant experiences high "stress" levels.
▪ Trunk or rock format; it is used with plants that do not require a nutritional substrate to grow as they grow with the roots adhered to trunks and rocks such as epiphytes. The disadvantages are:
   o the plant requires a long period for the roots to adhere to the trunk or rock;
   o their transport is complex since they may be damaged as a result of rubbing or tipping over;
   o the rocks and trunks increase the volume to be transported and consequently the cost thereof;
   ∘ often, the shape and size of the rock or trunk do not meet the needs of the end user.
▪ In vitro plate format; is used for plants cultivated in vitro, in a laboratory, using tissue culture. The disadvantages are:
   o they grow to a miniature size with very short in height;
   o The in vitro system promotes the planting, but requires removing completely the cultivation medium;
   o during transport it may tip over and then the medium will cover the plant entirely, which will provide a bad appearance, in addition the gel removal becomes complicated;
   o because the plant is in an in vitro space, if bacteria enter, they grow quickly thanks to the culture medium and invade the plant.

In short, there is no generic solution that enables the production, sale and ulterior use of any variety of aquatic or marsh plant in an all-in-one format, which does not require maintenance at the point of sale, which does not require a previous handling by the customer in order to use and enjoy the plant, which does not require a continuous fertilising for the correct growth and maintenance of the plant, which does not require the plant to be planted or placed in a suitable soil for aquatic or marsh plants; and which in a non-exhaustive manner, does not require previous knowledge or experience from the user.

The all-in-one, flexible, multi-purpose stand-alone container comprising an improved fertilised substrate, object of the present invention, solves the aforementioned drawbacks as it enables the plant to grow in the substrate of the invention itself, offering freedom, convenience and ease of use.

The all-in-one, flexible, multi-purpose stand-alone container comprising an improved fertilised substrate may be used for one single plant, like the products currently available on the market, or in an artistic composition of two or more plants, since being a stand-alone container it does not require to be planted to be used.

Likewise, the all-in-one container and fertilised substrate allow for a self-sufficient, multi-purpose and flexibility in use, unknown on the market. Users may place the plant without distinction as to whether the medium is submerged, partially submerged or emerged, with or without substrate and without it being necessary for them to carry out any prior handling. Likewise, it may be located freely, without restriction, increasing the creative possibilities. It is possible to use it in substrate-less spaces, for example, on rocks, trunks, suspended, floating, etc.

The design and composition of the substrate allow for a high degree of flexibility, as it may be located in crevices, among branches, etc., adapting its shape by compression to the desired location.

The invention solves the maintenance and nutrition of the plants for long periods of time that may even last years. Slow or controlled-release fertilisers, as is well known, offer suitable doses of nutrients, ensuring an excellent maintenance of the aquatic or marsh plants over their entire life cycle, production, sale and usage and is presented in small spheres having a diameter between 1 and 4 mm and are covered with a substance, which delays their dissolution, and therefore the release of the nutrient substances in the water of the substrate.

### Description of the invention

The invention, subject matter of the present specification, comprises a bag made of a highly-durable, porous stretch material, i.e., that maintains its structure for years, and is suitable to be printed, so as to bear an identification and description of the product either by printing them on the bag or on a piece of the porous and stretch material that is suitable to be printed, which contains a mixture of earths, fibres, fertilisers, preferably of slow release and porous materials. The invention has a density that is greater than the density of water, it does not float, and it may be used right-away without it being necessary for the client to carry out any prior handling in an aquatic environment, without distinction as to whether is submerged, partially submerged or emerged, and with or without substrate.

The material of the bag is, preferably, a polymer stretch plastic, and the bags may have different sizes and shapes so as to be adapted to any plant variety. Another option is for the material of the bag to be a net or mesh, or that said material is woven or non-woven with other materials having similar features such as natural fibres or artificial fibres like lycra, silicone tissues, among others.

The product may be identified, preferably thanks to the fact that the bag may bear a printing gathering information about the product, trademark, description, etc., and/or by means of a piece of porous and stretch material with an adhesive suitable for aquatic environments, preferably latex or other adhesives having similar features such as dietary epoxy, etc.

The substrate is a mixture of earths, preferably black earth, fibres, preferably coconut fibre and white peat in a suitable proportion, which may vary. The mixture of earths may be a composition of mixed, humus-bearing, clay soils, etc., and the mixture of fibres may be with natural fibres, hemp, flax, etc., or artificial fibres, cellulosic, protein-rich, alginic, etc., with similar features.

It is possible to add a series of improving substances to the mixture in order to improve the physical and chemical properties thereof, such as for instance, fertilises and non-organic materials, to increase their water and nutrient retention capacity and to improve the aeration and permeability thereof, thus obtaining what is known as an improved earth and therefore an improved substrate since it contains the improved soil.

The fertilisers, which may be of the controlled-release variety, are preferably a mixture of primary and secondary macronutrients, such as nitrogen, phosphorus, potassium, etc., micronutrients, such as iron, zinc, boron, etc. and acids, among others, humic, and fulvic acid, in a suitable proportion. Wherein it is possible to vary the proportions and varieties of the fertilizers, such as guano, etc., having similar features.

The porous material is preferably volcanic sand. Being it possible to be mixed or to vary their proportion and use other porous materials with similar properties such as pumice stone, porous ceramics, sponges, etc.

The usage and manufacturing process of the invention comprise the following steps:
a) one or more earths and fibres are mixed, preferably black earth, coconut fibre and white peat, and said mixture is compacted according to the shape chosen;
b) the compacted mixture is covered with a bag made of porous and stretch material; preferably polymer plastic;
c) a cavity is dug in the compacted mixture;
d) a mixture of black earth, fertilisers and the porous material, preferably volcanic sand in a suitable proportion is inserted into the cavity;
e) the cavity is covered, preferably with a piece of porous and stretch material, which bears on one of its sides an adhesive suitable for aquatic environments, preferably innocuous latex; the sticker acts both as a closure and as a support for the information and identification data;
f) the compacted mixture is hydrated with water, to which fertilisers for aquatic and marsh plants have been previously added. After hydration the compacted mixture increases in size;
g) the aquatic and/or marsh plants are planted either by pressing directly with a pair of planting clamps on the bag or mesh or performing small cuts in the bag made of plastic material in order to carry out the plantation;
h) a growth period for aquatic and marsh plants is left to elapse until the plant covers part of the all-in-one container and fertilised substrate;
i) the consumers place the cultivated plant into the all-in-one container and fertilised substrate in the spot chosen, in an emerged, submerged or partially submerged state and without being it necessary for them to carry out any prior handling of the plant.

With the present invention and its procedure of use, the consumer may enjoy aquatic and marsh plants without it being necessary for them to carry out any prior handling or aggressive treatment of the plants and placing them directly in aquariums, aqua terrariums, humid terrariums, green walls, ponds, vases or other recipients with decorative or ornamental purposes with or without substrate whatsoever.

The present invention has the following benefits and advantages when compared to other formats on the market:
▪ the aquatic or marsh plants are displayed in an all-in-one, flexible, multi-purpose stand-alone supporting container comprising a fertilised substrate;
▪ the product is amphibious: it may be used without distinction as to whether the medium is submerged, partially submerged or emerged;
▪ the invention is flexible, multi-purpose stand-alone, which enables to place it freely anywhere: in crevices, among branches, suspended, etc.;
▪ the slow or controlled-release fertiliser offers adequate nutrient doses, ensuring an excellent maintenance of the aquatic or marsh plants over their entire life cycle: production, sale and after sale;
▪ the continuous nutrition with a constant dose of the controlled-release fertilisers ensures a uniform and vigorous growth of the plants; produces plants of higher quality, avoids nutritional mistakes and the risks associated thereto, minimises work and maintenance over the entire life cycle of the product;
▪ it is not necessary for the final user to carry out any handling of the invention;
▪ the sale of the aquatic plants is carried out with them in an emerged state, except for those few varieties that are strictly aquatic, which facilitates their maintenance and exponentially multiplies the life of the product in the points of sale;
▪ the pH of the substrate is stable and controlled, varies between 4 and 7, which is optimum for most aquatic and marsh plants;
▪ the substrate is an excellent chelating agent and has a great cation-exchange capacity;
▪ the substrate has a high capacity to retain water and nutrients through capillarity action and to release them progressively, thus avoiding leaching;
▪ the substrate is very rich in carbon, which confers a great resistance to degradation, as well as high stability;
▪ the substrate has a low conductivity;
▪ the substrate is an enabling environment for root development and provides optimal conditions for the growth of the plants thanks to its content of nitrogen, phosphorous, potassium, trace elements, as well as, humic and fulvic acids.
▪ the substrate improves the absorption and assimilation of nutrients and increases the metabolism of plants;
▪ the substrate improves water retention and drainage;
▪ the substrate improves the mobility of micronutrients and the activity of the microbial flora;
▪ the substrate is a natural and biological liquid filter due to its high porosity, which is essential for the culture of filtering bacteria;
▪ the substrate is a base of aquatic substrates that prevents the substrate compaction because of water pressure;
▪ the substrate has a good aeration and prevents the formation of anaerobic substrates.

### Description of the figures

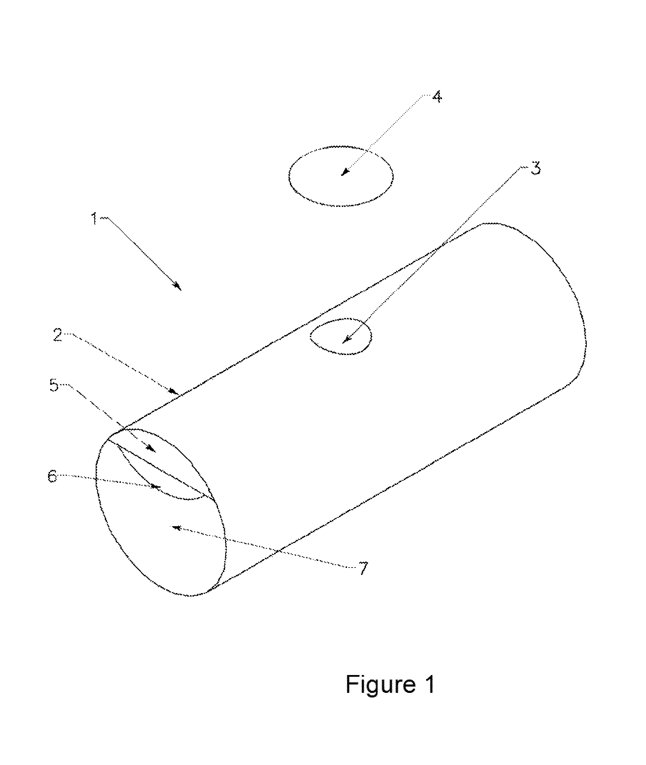

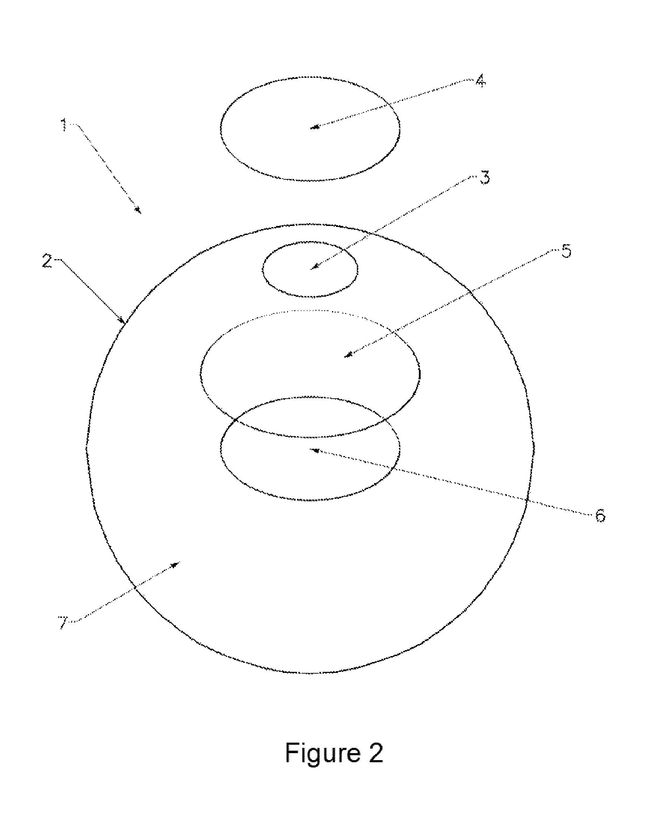

Figure 1 shows the all-in-one, flexible, multi-purpose stand-alone container comprising an improved fertilised substrate with a cylindrical shape and figure 2 shows it with a spherical shape (1) wherein the container and the substrate (2), the hole (3) made with the identifying piece or sticker (4) covering said hole are also shown. Likewise, it also exhibits the area (5) where the porous materials are found (preferably volcanic sand), the area (6) with the black earth mixture improved with slow-release fertilisers (premium macronutrients, micronutrients, fulvic and humic acids) and the area (7) in which the substrate, a mixture of soil and fibres, preferably black earth, coconut fibres and white peat, are located.

### Preferred embodiment of the invention

The preferred embodiment of the all-in-one, flexible, multi-purpose stand-alone container comprising an improved fertilised substrate for aquatic and marsh plants, comprises a porous material or mesh netting made of a stretch polymer plastic material, containing a fertilised substrate, a mixture of black earth, coconut fibre and white peat, conditioned so as to have a pH between 4 and 7, slow-release fertilisers (humic acid, fulvic acid, macronutrients and micronutrients) and porous material (volcanic sand) that has been compacted with the desired shape (sphere, a half of a sphere, diverse shapes: U, L, X, etc.).

The use and manufacturing process of the invention comprise the following steps:
a) mixing the soil composed of earth and fibres, preferably black earth, coconut fibre and white peat, and said mixture is then compacted according to the desired shape;
b) covering the compacted mixture with a bag, tissue or net, made of long-lasting reticular and stretch material, preferably polymer plastic;
c) digging a cavity in the compacted mixture;
d) inserting a mixture of black earth (preferably granulated) into the cavity together with slow-release fertiliser, preferably fulvic acid, humic acid, macronutrients and micronutrients; and porous material, preferably volcanic gravel in a suitable proportion;
e) closing the cavity with a sticker or adhered piece, preferably made of a porous plastic material, using an innocuous adhesive that is suitable for aquatic environments. The sticker shall bear printed on its outer face the information deemed as necessary, such as the name of the plant, care instructions, bar codes or other;
f) hydrating the compacted mixture with water, to which preferably a fertiliser specific for aquatic plants has been previously added. After hydration the compacted mixture increases in size;
g) carrying out the plantation with one or more plants to obtain a composition. The plantation is carried out using planting clamps with which the plastic bag is pressed and the plant is introduced into the object of the invention;
h) letting a suitable growth period for the plants used elapse until they cover the container entirely;
i) distributing, displaying and selling the aquatic or marsh plants in greenhouses, flower shops, pet shops, etc.;
j) placing the product, the composition of cultivated plants into the all-in-one, flexible, multi-purpose stand-alone supporting container comprising a fertilised substrate in the spot chosen by the consumer, in an emerged, submerged or partially submerged state and without it being necessary to carry out any handling of the plant.

## Claims

1. An all-in-one, flexible, multi-purpose stand-alone container comprising an improved fertilised substrate for aquatic and marsh plants **characterised in that** it comprises a container and a substrate, said container being a bag made from a porous and stretch material to which a piece is incorporated that is made from the same or another porous stretch material suitable for being printed, joined to said bag by means of an adhesive suitable for aquatic environments; said substrate comprising a mixture of one or more earths, a mixture of one or more types of fibres, a mixture of one or more fertilisers and a mixture of one or more porous granular material.

2. The all-in-one, flexible, multi-purpose stand-alone container comprising an improved fertilised substrate for aquatic and marsh plants according to claim 1 **characterised in that** the bag is made of reticular material.

3. The all-in-one, flexible, multi-purpose stand-alone container comprising an improved fertilised substrate for aquatic and marsh plants according to claim 1 or 2 **characterised in that** the material is polymer plastic.

4. The all-in-one, flexible, multi-purpose stand-alone container comprising an improved fertilised substrate for aquatic and marsh plants according to claim 1 or 2 **characterised in that** the porous and stretch material is made of natural or artificial fibres or of a mixture of natural fibres and artificial fibres.

5. The all-in-one, flexible, multi-purpose stand-alone container comprising an improved fertilised substrate for aquatic and marsh plants according to claim 1 or 2 **characterised in that** the porous and stretch material is made of natural fibres.

6. The all-in-one, flexible, multi-purpose stand-alone container comprising an improved fertilised substrate for aquatic and marsh plants according to claim 1 or 2 **characterised in that** the porous and stretch material is made of artificial fibres.

7. The all-in-one, flexible, multi-purpose stand-alone container comprising an improved fertilised substrate for aquatic and marsh plants according to claim 1 or 2 **characterised in that** the porous and stretch material is made of a mixture of natural fibres and artificial fibres.

8. The all-in-one, flexible, multi-purpose stand-alone container comprising an improved fertilised substrate for aquatic and marsh plants according to any of the previous claims **characterised in that** the porous and stretch material is woven or non-woven.

9. The all-in-one, flexible, multi-purpose stand-alone container comprising an improved fertilised substrate for aquatic and marsh plants according to any of the previous claims **characterised in that** the porous and stretch material is suitable to be printed.

10. The all-in-one, flexible, multi-purpose stand-alone container comprising an improved fertilised substrate for aquatic and marsh plants according to any of the previous claims **characterised in that** the bag may have different shapes and sizes.

11. The all-in-one, flexible, multi-purpose stand-alone container comprising an improved fertilised substrate for aquatic and marsh plants according to claim 1 **characterised in that** the soil mixture comprises white peat and black earth.

12. The all-in-one, flexible, multi-purpose stand-alone container comprising an improved fertilised substrate for aquatic and marsh plants according to claim 11 **characterised in that** improving substances are added to the white peat and black earth mixture.

13. The all-in-one, flexible, multi-purpose stand-alone container comprising an improved fertilised substrate for aquatic and marsh plants according to any of the previous claims **characterised in that** the fibres forming part of the substrate are coconut fibres,

14. The all-in-one, flexible, multi-purpose stand-alone container comprising a fertilised substrate for aquatic and marsh plants according to any of the previous claims **characterised in that** the mixture of one or more fertilisers is a mixture of primary macroelements, secondary macroelements, microelements, humic acid, fulvic acid.

15. The all-in-one, flexible, multi-purpose stand-alone container comprising an improved fertilised substrate for aquatic and marsh plants according to claim 14 **characterised in that** the fertilisers are controlled-release fertilisers.

16. The all-in-one, flexible, multi-purpose stand-alone container comprising a fertilised substrate for aquatic and marsh plants according to any of the previous claims **characterised in that** the porous granular materials are volcanic sand.

17. Production method of the all-in-one, flexible, multi-purpose stand-alone container comprising a fertilised substrate for aquatic and marsh plants as described in the previous claims and **characterised in that** it comprises the following steps:
a. the mixture of one or more earths being mixed with the mixture of one or more fibres and then compacted in a predetermined shape;
b. it being covered with the bag made of porous and stretch material;
c. a cavity being dug in the compacted mixture;
d. a mixture of black earth, the mixture of one or more fertilisers and the mixture of one or more porous materials being inserted into the cavity;
e. the cavity being covered with the piece of porous and stretch material;
f. it being hydrated with a dissolution of the mixture of one or more fertilisers, in water;
g. one or more aquatic or marsh plants being planted;
h. letting the predetermined growth period for aquatic and marsh plants to elapse;
i. placing them in the spot chosen by the end user.
